# EUROPÄISCHE PATENTSCHRIFT

(11) **EP 1 511 949 B1**
(45) Veröffentlichungstag und Bekanntmachung des Hinweises auf die Patenterteilung: **07.06.2006**
(21) Anmeldenummer: 03757059.5
(22) Anmeldetag: 11.06.2003
(51) Int. Cl.: F16D 69/02, C04B 35/80, B32B 5/06

(54) **NACH TFP PROZESS HERGESTELLTES TRIBOLOGISCHES FASERVERBUNDBAUTEIL**
TRIBOLOGICAL FIBER COMPOSITE COMPONENT PRODUCED ACCORDING TO THE TFP PROCESS
ELEMENT COMPOSITE FIBREUX TRIBOLOGIQUE PRODUIT SELON LE PROCEDE DE PLACEMENT DE FIBRES ADAPTE (TFP)

(30) Priorität: 11.06.2002 DE 10225954
(43) Veröffentlichungstag der Anmeldung: 09.03.2005
(73) Patentinhaber: Schunk Kohlenstofftechnik GmbH, D-35452 Heuchelheim (DE)
(72) Erfinder: HENRICH, Martin, 35582 Wetzlar (DE); EBERT, Marco, 35083 Wetter (DE); SCHEIBEL, Thorsten, 61231 Bad Nauheim (DE); WEISS, Roland, 45625 Hüttenberg (DE); KEHR, Dieter, 35444 Biebertal (DE)
(74) Vertreter: Stoffregen, Hans-Herbert
(86) Internationale Anmeldenummer: PCT/EP2003/006111
(87) Internationale Veröffentlichungsnummer: WO 2003/104674

(56) Entgegenhaltungen:
- EP-A- 0 748 781
- FR-A- 2 754 031
- US-A- 6 042 935
- P. MATTHEIJ K. GLIESCHE D. FELTIN: "3D reinforced stitched carbon/epoxy laminates made by tailored fibre placemnet" COMPOSITES PART A APPLIED SCIENCE AND MANUFACTURING, 1. März 2000 (2000-03-01), Seiten 571-581, XP002253608

## Beschreibung

Die Erfindung bezieht sich auf Verfahren zur Herstellung eines tribologischen Faserverbundbauteils sowie auf ein tribologisches Faserverbundbauteil nach den Oberbegriffen der Ansprüche 1 bis 29.

Ein Faserverbundbauteil in Form eines Gitters ist der DE 199 57 906 A1 zu entnehmen. Bei dem bekannten Faserverbundbauteil handelt es sich im Wesentlichen um ein Gitter, das in den Kreuzungspunkten gleiche oder im Wesentlichen gleiche Materialstärke bzw. einen gleichen oder im Wesentlichen gleichen Faservolumengehalt wie in den angrenzenden Abschnitten aufweist. Hierdurch ergibt sich der Vorteil, dass das Gitter über seine gesamte Fläche eine gleiche Stärke aufweist.

Aus dem Prospekt DE. Z.: "Beanspruchungsgerechte Preformen für FaserverbundBauteile", Institut für Polymerforschung Dresden e. V., März 1998, werden beanspruchungsgerechte Preformen für Faserverbundbauteile vorgeschlagen, die in Tailored Fiber Placement - Technologie (TFP-Technologie) herstellbar sind. Mit dieser Technologie können Verstärkungsfasern auf Textilhalbzeuge oder Folien in großer Mustervielfalt aufgelegt werden. Durch mehrmaliges Übereinandernähen sind verschiedene Materialdicken möglich. Dabei sind tiefziehfahige und/oder 3D-verstärkende Preformen herstellbar, die zur Weiterverarbeitung in eine, Kunststoffmatrix eingebettet werden, um durch Infiltration und Härten ein CFK (kohlenstofffaserverstärkter Kunststoff) -Bauteil zu erhalten (s. auch US.Z.: Composites: Part A 31 (2000) 571 - 581, P. Mattheiy et al., "3D reinforced stitched carbon/epoxy laminates made by tailored fibre placement".

Aus der FR-A- 2 754 031, der EP-A- 0 748 781 und der US-A- 6 042 935 sind tribologische Faserverbundbauteile bekannt, die aus durch Nadeln oder Bindemittel miteinander verbundenen Schichten oder Gelegen bestehen, die ihrerseits voneinander abweichende physikalische Eigenschaften aufweisen können.

In der DE 199 32 274 A1 wird ein Faserverbundwerkstoff und ein Verfahren zu seiner Herstellung beschrieben. Dabei enthält der Faserverbundwerkstoff eine duromere Matrix und Verstärkungsfasern, die in ihrer inneren Lage eine hohe Haftung und in ihren äußeren Lagen keine Haftung zu der duromeren Matrix aufweisen. Durch diese Maßnahmen ist die Möglichkeit gegeben, dass der äußere Bereich des CFK-Faserverbundwerkstoffs höhere Belastungen aufnehmen kann als der innere.

Um Faser-Kunststoff-Verbundwerkstoffe kontinuierlich und bauteil- bzw. prozessorientiert herzustellen, wird nach der DE 100 05 202 A1 vorgeschlagen, dass Faserbündel auf einer Legeeinheit abgelegt und durch beliebig orientierte Nähte fixiert werden.

Preformen durch Weben bzw. Nähen herzustellen, ist aus der Literaturstelle US.Z.: BROSLUS, D., CLARKE, S.: Textile Preforming Techniques for Low Cost Structural Composites. In: Advanced Composite Materials New Developments and Applicated Conference Proceedings, Detroit, Michigan, USA, Sept. 30 - Okt. 3, 1991, bekannt, wobei die Preformen eine Anisotropie aufweisen können.

Aus der DE 197 16 666 A1 ist ein beanspruchungsgerechtes Verstärkungsgebilde bekannt, das ein Grundmaterial aus einem Gewebe, Vlies oder einer Folie mit in gerader oder radialer oder in anderer Richtung verlaufenden Verstärkungsfasern aufweist, um ein CFK-Bauteil herzustellen.

Ein CFK-Faserverbundteil für eine Kraftfahrzeugbodengruppe ist aus der DE 196 08 127 A1 bekannt.

Für die Raumfahrt oder den Flugzeugbau bestimmte faserverstärkte Verbundbauteile nach US 5,871,604 weisen kurze Fasern in der Matrix und längere Fasern als Verstärkungsmaterial auf.

Ein Verfahren zur Herstellung eines C/C Verbundkörpers mit einer inneren Schicht und einer unterschiedlichen äußeren Schicht wird in der EP 0 806 285 B1 beschrieben.

Der vorliegenden Erfindung liegt das Problem zu Grunde, ein Verfahren zur Herstellung eines tribologischen Faserverbundbauteils sowie ein tribologisches Faserverbundbauteil insbesondere in Form einer Brems- oder Kupplungsscheibe so weiterzubilden, dass dieses individuell an den jeweiligen Einsaizbereich anpassbar ist, ohne dass ein hoher herstellungstechnischer Aufwand notwendig ist.

Die Aufgabe wird durch ein Verfahren mit den Merkmalen des Anspruchs 1 gelöst. Weiterbildungen ergeben sich aus den abhängigen Ansprüchen 2 bis 28. Zur Lösung des Problems zur Herstellung eines tribologischen Faserverbundbauteils sind die Maßnahmen des Anspruchs 29 vorgesehen. Weiterbildungen ergeben sich aus den abhängigen Ansprüchen.

Erfindungsgemäß wird ein tribelogisches Faserverbundbauteil hergestellt, das eine Struktur mit zumindest einer eine beanspruchungsgerechte Faserablage aufweisenden TFP-Preform aufweist, wobei die Struktur durch Materialabscheidung aus der Gasphase stabilisiert und/oder mit einem Monomeren und/oder Polymeren versehen, gehärtet und pyrolysiert ist, wobei insbesondere Bereiche der TFP-Preform in ihrem Faservolumen und/oder ihrer Ablagedichte und/oder ihren Faserlängen und/oder ihrer Faserverlegerichtung voneinander abweichen.

Anstelle der Verwendung einer aus zumindest einem Monomer und/oder einem Polymer bestehenden Matrix und anschließendem Härten und Pyrolysieren kann eine Stabilisierung der Struktur auch durch Material- wie Kohlenstoffabscheidung aus der Gäsphase z B. mittels CVD (Chemical Vapor Deposition) und/oder CVI (Chemical Vapor Infiltration) erfolgen. Eine SiC- oder B₄C- oder Si-Abscheidung kommt gleichfalls in Frage. Auch besteht die Möglichkeit einer Vorstabilisierong mittels z. B. CVI und anschließender Infiltration mit einem Monomer und/oder Polymer mit anschließendem Härtungs- und Pyrolyseschritt.

Erfindungsgemäß wird ein faserverstärkter Kohlenstoff- oder Keramikkörper wie C/C, C/SiC oder CMC (Ceramic Matrix Composite) in Form eines tribologischen Faserverbundbauteils zur Verfügung gestellt.

Insbesondere kann das Faserverbundbauteil aus einem Verband aus zumindest einer Preform und einem Gelege und/oder einem Gewebe und/oder Kurzfasern und/oder Filz und/oder Vlies bestehen, das bzw. die aus Kohlenstoff bestehen oder in Kohlenstoff konvertierbar sind bzw. aus einer Kohlenstoff- oder einer keramischen Faser besteht.

Auch besteht die Möglichkeit, durch Bearbeiten der äußeren Lagen oder Schichten ein Faserverbundbauteil zur Verfügung zu stellen, dessen Außenlagen oder -schichten gleiche Faserorientierungen in der Ebene der Schicht bzw. Lage aufweisen.

Um Reibkräfte im erforderlichen Umfang aufnehmen zu können, wird vorgeschlagen, dass das Faserverbundbauteil so aufgebaut ist, dass im Außenbereich Kurzfasern vorgesehen sind. Kurzfasern sind solche, die insbesondere eine mittlere Länge zwischen 1 mm und 20 mm aufweisen. Die Kurzfasern können z. B. in Form einer losen Schüttung oder eines Vlieses auf die TFP-Preform aufgebracht werden. Bei einer losen Schüttung werden Kurzfasern in einem Gesenk auf eine TFP-Preform aufgebracht, gepresst und gehärtet.

Eine Weiterbildung der Erfindung sieht vor, dass die TFP-Preform mit integral ausgebildeten Öffnungen und/oder Kanälen versehen ist, die während der Verdichtung mit verlorenen oder nicht verlorenen Kernen stabilisiert bzw. in der gewünschten Form enthalten sind. Entsprechend ausgebildete Kanäle können als Kühlkanäle dienen.

Auch kann das Faserverbundbauteil aus mehreren einteiligen Preformen zusammengesetzt sein, die miteinander vernäht sind.

Um eine dreidimensionale Verstärkung zu erzielen, können Verstärkungsfaser wie z. B. Kohlenstofffasern mit der Preform vernäht sein, wobei deren Anteil zwischen 1 % und 40 % der Gesamtfasem, insbesondere im Bereich zwischen 5 % und 20 % der Gesamtfasern beträgt.

Auch besteht die Möglichkeit, däs Faserverbundbauteil aus ein oder mehreren Preformen herzustellen und/oder Rovings mit voneinander abweichender Fadenzahl zu verwenden. Auch können Rovings unterschiedlicher Längen- und/oder Flächenerstreckung benutzt werden.

Insbesondere zeichnet sich die Erfindung im Wesentlichen dadurch aus, dass die Struktur zumindest zwei TFP-Preformen aufweist, die vorzugsweise gleich oder im Wesentlichen gleich aufgebaut sind. Auch kann die Struktur gegebenenfalls mit Kernen versehene Aussparungen und/oder Kanäle aufweisen, die ihrerseits von Stegen begrenzt sind, die ebenfalls als TFP-Preformen ausgebildet sind, wobei die Verstärkungsfasern vorzugsweise sich kreuzend, vorzugsweise um einen Winkel von ± 45° sich kreuzend verlegt sind.

Die Verstärkungsfasern in der TFP-Preform, die aus einem oder mehreren übereinander angeordneten Schichten bestehen kann, sollten insbesondere derart verlegt sein, dass bei einer kreisscheibenförmigen Form die pyrolysierte Preform in ihrer radialen Abmessung der der Preform entspricht oder weitgehend entspricht.

Die Verstärkungsfasern der einzelnen Schichten oder Lagen sind ihrerseits mit der Basisschicht vernäht, die auf Kohlenstoffbasis, Aramid- und/oder Keramikfaserbasis und/oder Polymerfaserbasis aufgebaut sein kann.

Auch wenn grundsätzlich das Bestreben besteht, bei einigen tribologischen Körpern wie einer Kupplungsscheibe eine einzige TFP-Preform hinreichender Dicke zu verwenden, kann die Struktur auch zwei oder mehrere TFP-Preformen umfassen, die im Wesentlichen einen gleichen oder im Wesentlichen gleichen Aufbau aufweisen sollten.

Sofern eine TFP-Preform mehr als eine Lage oder Schicht aufweist, sollte die Anzahl bzw. Ausbildung derart ausgewählt werden, dass sich ein spiegelsymmetrischer Aufbau der TFP-Preform insbesondere in Bezug auf deren Mittensymmetrie ergibt, um beim fertigen Bauteil Verwerfungen oder einen Verzug auszuschließen.

Werden mehrere Lagen oder Schichten benutzt, sollten zumindest einige dieser eine voneinander abweichende Faserorientierung in der Ebene der Schicht bzw. Lage aufweisen. So können z B. in inneren Schichten, die an der Mittensymmetrieebene angrenzen, die Fasern radial verlegt sein, wohingegen die angrenzenden Schichten Fasern aufweisen, die z. B. kreisringförmig verlegt sind. Ein evolventenförmiger Verlauf oder ein tangentialer Verlauf ist gleichfalls denkbar. Ein tangentialer Verlauf ist dabei ein solcher, bei dem die Fasern tangential von einer zentralen Innenöffnung der Preform ausgehen.

Bei einer Struktur einer Bremsscheibe ist vorgesehen, dass zumindest zwei zueinander beabstandete TFP-Preformen über aus Verstärkungsfasern gebildete Stege verbunden sind.

Insbesondere ist vorgesehen, dass eine TFP-Preform in dem Bereich, in dem eine Krafteinleitung z. B. über eine Schraube, einen Bolzen oder eine Verzahnung erfolgt, eine Aufdickung aufweist, die Verstärkungsfasern enthält. In der Aufdickung können die Verstärkungsfasern z. B. sich kreuzend verlegt sein.

Unabhängig hiervon sieht eine Weiterbildung der Erfindung vor, dass insbesondere für eine Bremsscheibe bestimmte TFP-Preformen in ihren freien Außenflächen eine Vliesschicht aufweisen.

Weitere Einzelheiten Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: eine Prinzipdarstellung einer für eine Kupplungsscheibe bestimmte Preform.
- Fig.2: eine aus Preformen hergestellte 3D-Struktur bestimmt für eine Bremsscheibe,
- Fig. 3: eine Prinzipdarstellung einer für eine Kupplungsscheibe bestimmten Preform,
- Fig. 4: eine Prinzipdarstellung einer für eine Bremsscheibe bestimmten Preform,
- Fig. 5: eine Schnittdarstellung durch eine aus mehreren Preformen zusammengesetzte Struktur bestimmt für eine Bremsscheibe und
- Fig. 6: die Struktur gemäß Fig. 5 in Ansicht A und
- Fig. 7: einen prinzipiellen Aufbau einer TFP-Preform, die aus mehreren Schichten oder Lagen besteht.

In den Fig. sind rein beispielhaft Preformen dargestellt, aus denen ein Faserverbundbauteil in Form einer Brems- oder Kupplungsscheibe hergestellt wird. Hierzu wird die nachstehend näher zu erläuternde Preform in eine Form gebracht, unter Druck bei gleichzeitiger Wärmebehandlung ausgehärtet und sodann bei einer Temperatur von z. B. 500 °C bis 1450 °C, insbesondere im Bereich zwischen 900 °C und 1200 °C carbonisiert und gegebenenfalls sodann bei einer Temperatur zwischen 500 °C und 3000 °C, insbesondere im Bereich zwischen 1800 °C und 2500 °C graphitiert.

Unabhängig hiervon ist vorgesehen, dass die Struktur nach der Pyrolyse - gegebenenfalls nach einer Erstbearbeitung - siliziert wird, wobei insbesondere ein Kapillarprozess bei Temperaturen in einem Bereich von in etwa 1450 °C und in etwa 1850 °C durchgeführt wird.

Die Preform selbst kann vor oder nach dem Einbringen in die Form mit einem Monomeren oder insbesondere Polymeren wie Harz imprägniert werden. Anstelle und ergänzend zu den Monomeren bzw. Polymeren können auch thermoplastische Polymerfasern zur Bildung der Matrix benutzt werden.

Die Preform selbst wird nach der Tailored-Fiber-Placement-Technologie (TFP-Technologie) hergestellt. Hierzu werden Fasern auf einem Grundmaterial wie textiles Halbzeug oder Folie aufgenäht, wobei im gewünschten Umfang die zu vernähenden Fasern aus Verstärkungsfasern bestehen oder diese enthalten. Als Verstärkungsfasern kommen Roving-Stränge bzw. Faserbänder aus Natur-, Glas-, Aramid-, Kohlenstoff- oder Keramikfasern zum Einsatz, um nur beispielhaft einige zu nennen.

Damit der aus einer oder mehreren Preformen hergestellte Faserverbundkörper eine belastungsgerechte Phasenorientierung aufweist, können die Fasern bzw. Faserstränge, die zu der Preform vernäht werden, gewünschte Orientierung aufweisen.

Das Grundmaterial - auch Basisschicht genannt - besteht insbesondere auf Kohlenstoffbasis, kann aber auch aus Aramid- und/oder Keramikfasern und/oder Kunststofffasem bestehen.

Werden auf eine entsprechende Basisschicht mehrere Schichten oder Lagen von Verstärkungsfasern aufgebracht, so werden diese grundsätzlich jeweils mit der Basisschicht vernäht. Als Nähfäden kommen Polymerfäden oder Kohlenstofffäden in Frage. Letztere werden dann bevorzugt gewählt, wenn die TFP-Preform bzw. das aus diesem hergestellte Bauteil eine gewünschte Wärmeleitfähigkeit in Bauteildickenrichtung aufweisen soll.

Zu der Basisschicht ist anzumerken, dass diese bei der weiteren Bearbeitung der Preform mit den Einzelschichten oder Lagen vernäht bleiben kann. Es besteht aber auch die Möglichkeit, dass die Basisschicht vor der Weiterbehandlung entfernt wird.

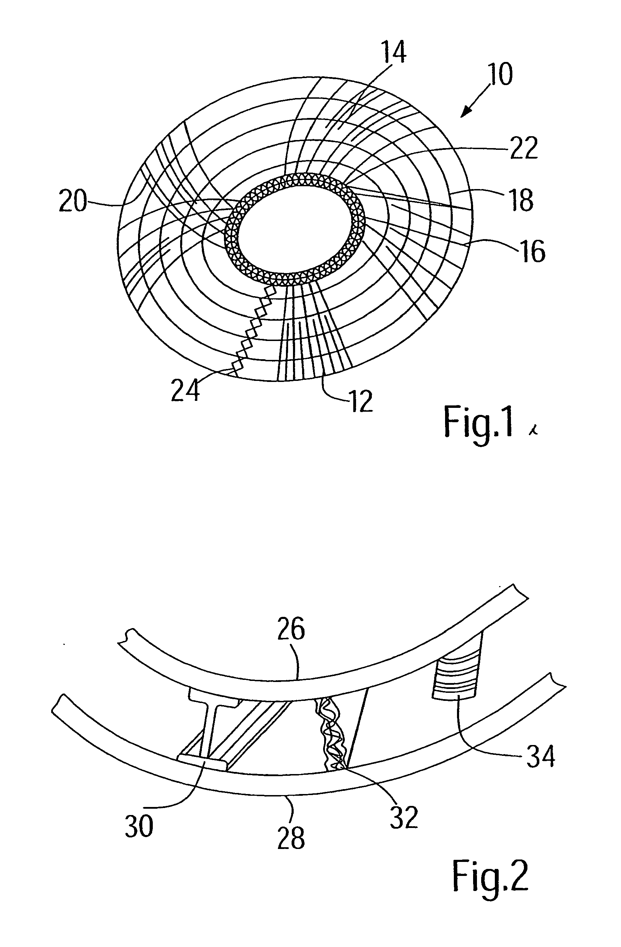

So ist bei einer TFP-Preform 10 gemäß Fig. 1 vorgesehen, dass Verstärkungsfasern radial (Fasern 12), evolventenförmig (Fasern 14) oder tangential (Fasern 16) verlaufen, wobei die Grundstruktur der TFP-Preform 10 durch spiral- bzw. kreisförmig verlaufende Fasern 16 gebildet wird. Auch besteht die Möglichkeit, dass evolventenförmig verlaufende Fasern sich kreuzen (Bereich 20), um im gewünschten Umfang Faservolumengehalt bzw. Ablagedichte über der TFP-Preform 10 zu variieren, wodurch die gewünschte belastungsorientierte Ausbildung der TFP-Preform 10 sichergestellt wird.

Mittels der radial verlaufenden Fasern 12 können Fliehkräfte und mittels der tangential verlaufenden Fasern 16 Reibkräfte aufgenommen werden. Die evolventenförmig verlaufenden Fasern 14, 20 sind sowohl auf Flieh- als auch auf Reibkräfte ausgerichtet.

Zeritral kann die TFP-Preform 10 mit zusätzlichen Verstärkungen ausgebildet sein, die durch eine hohe Faserdichte bzw. einen hohen Faservolumengehalt ausbildbar ist. Auch können zusätzliche Stegstrukturen (Bereich 24) ausgebildet sein.

Die die gewünschten Strukturen aufweisenden Bereiche 22, 24 werden mittels geeigneter Nähtechnik mit dem Grundmaterial der TFP-Preform 10 bzw. mit den vorhandenen Fasern vernäht.

In Fig. 2 sind zwei TFP-Preformen 26, 28 über Stege 30, 32, 34 gewünschter Geometrie miteinander verbunden, wobei die TFP-Preformen 26, 28 entsprechend den zuvor wiedergegebenen Erläuterungen bereichsweise in ihren Faservolumina, Ablagedichten und/oder in den Längen der verwendeten Fasern variieren können, um betastungsspezifische Eigenschaften zu erzielen.

Die Stege 30, 32, 34 selbst sind gleichfalls Preformen, die jedoch nicht zwingend, allerdings bevorzugt nach der TFP-Technologie hergestellt sein müssen.

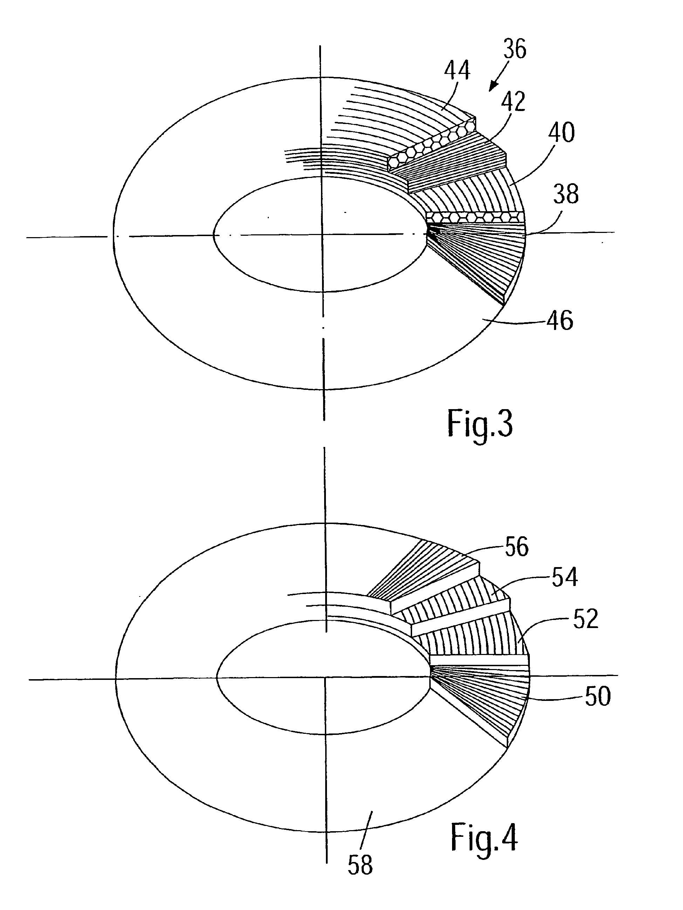

Anhand der Fig. 3 bis 6 sollen weitere hervorzuhebende Merkmale der Erfindung erläutert werden. Auch ergeben sich hervorzuhebende erfinderische Verfahrensschritte zur Herstellung von tribologischen Bauteilen wie Kupplungs- und/oder Bremsscheiben.

In Fig. 3 ist eine Preform 36 dargestellt, die aus mehreren Schichten oder Lagen 38, 40, 42, 44 besteht. Dabei ist die erste Schicht 38 in bekannter Weise auf einer Basisschicht 46 aufgebracht wie aufgenäht, die bei der weiteren Verarbeitung genutzt oder aber auch entfernt werden kann. Bei der Basisschicht kann es sich z.B. um ein Gewebe, ein Vlies oder ähnliches handeln. Die erste Lage oder Schicht 38, die auf der Basisschicht 46 angeordnet ist, weist einen radialen Verlauf von Fasern auf. Die zweite Schicht oder Lage 30 zeigt eine kreisförmige Anordnung von Fasern. Die dritte Lage 32 umfaßt einen radialen Verlauf und die vierte Lage 44 einen kreisförmigen Verlauf von Fasern. Die Ablage der Kohlenstofffasern wurde dabei so gewählt, dass auch bei radialer Orientierung der Fasern eine ausgewogene und gleichmäßige Verteilung über die gesamte Kreisringfläche der Schichten oder Lagen 38 und 42 erfolgt.

Die Abmessungen der Preform 36 belaufen sich auf einen Außendurchmesser von in etwa 145 mm und einen Innendurchmesser (Loch) von in etwa 60 mm. Die Dicke kann in etwa 2,8 mm betragen.

Entsprechend aufgebaute Preformen 36, und zwar drei entsprechende TFP-Preformen 36 werden sodann mit einem Phenolharzsystem in einem Vakuumprozess imprägniert. Die nachfolgende Verdichtung der drei Preformen 36 zu einem Grünkörper wurde mittels einer Warmpresse bei einem Druck von z.B. 14 bar und bei einer Temperatur von in etwa 130 °C durchgeführt. Das Umwandeln des ausgehärteten Harzes in Kohlenstoff erfolgt in einem Pyrolyseprozess bei ca. 1200 °C.

Der so entstandene C/C-Körper weist eine Dichte von ca. 1,38 g/cm³ bei einer Porosität von ca. 24 % auf. Während der Pyrolyse schrumpft das Bauteil in Dickenrichtung vom Grünkörpermaß 6,9 mm auf das Maß 6,15 mm. Auf Grund der Faseranordnung bleiben die Maße des lnnen- und Außendurclunessers erhalten.

Der C/C-Körper wird vor der abschließenden Silizierung auf die Dimension 147 mm x 64 mm x 5,2 mm vorbearbeitet. Zu berücksichtigen ist hierbei die definierte Bearbeitung der späteren Reibflächen, so dass auf beiden Seiten der Scheibe die kreisförmige Faserorientierung zum Tragen kommt. Die Silizierung erfolgte mittels eines Kapillarenprozesses bei Temperaturen bis 1.700° C.

Die Siliziumaufnahme während der Umwandlung in einen C/C-SiC-Werkstoff betrug 75 Gew.-% . Der Werkstoff zeigt nun eine Dichte von 2,03 g/cm³ bei einer offenen. Porosität von 2,5 %.

Als letzter Bearbeitungsschritt erfolgt die Endbearbeitung und das Einbringen der Befestigungsbohrungen. Da auf Grund der speziellen Faserorientierung eine herkömmliche mechanische Untersuchung ungeeignet ist, wurden Schleuderversuche durchgeführt.

Bei fixer und spielfreier Aufnahme an vier Aufnahmebohrungen am Innendurchmesser wurde eine Berstdrehzahl von 26.700 min¹ erreicht. Der Bruch erfolgte an den Ausnahmebohrungen.

Vergleichende Untersuchungen mit einer gewebebasierenden Scheibe gleicher Abmessung zeigen eine Berstdrehzahl von 19.500 min¹. Auch durchgeführte FE- (Finite Elemente) Analysen zeigen eine deutlich ausgewogenere Spannungsverteilung und Verformung unter Last.

Die erreichten Vorteile sind neben einer höheren Belastbarkeit auch der deutliche geringere Verschnitt bei der Herstellung. Die Formstabilität während der Herstellung gestattet es, near-net-shape zu fertigen. Weiterhin ist es möglich für die tribologischen Eigenschaften die Faserorientierung im Reibbereich zu variieren.

Eine so hergestellte Kupplungsscheibe, die aus drei Preformen besteht, wobei jede der der Fig. 3 zu entnehmenden entsprechend aufgebaut ist, weist Endabmessungen von 145 mm x 60 mm x 2,8 mm auf. Dabei sind die Preformen derart übereinander angeordnet, um den Grünling zu bilden, dass nach der Endbearbeitung die Außenschichten eine kreisförmige Faserorientierung aufweisen.

Anhand der Fig. 4 bis 6 soll die erfindungsgemäße Lehre an einer innenbelüfteten Bremsscheibe erläutert werden, die Endmaße von in etwa Außendurchmesser 310 mm, Innendurchmesser 140 mm und Höhe 28 mm aufweisen.

Als Basiskomponenten bzw. Verstärkungen der Bremsscheibe dienen ebenfalls TFP-Preformen, von denen eine in der Fig. 4 dargestellt und mit dem Bezugszeichen 48 versehen ist. Die bei der fertigen Bremsscheibe einen Reibring bildende Preform 48 besteht aus Einzellagen oder Schichten 50, 52, 54, 56, die in TFP-Technologie miteinander verbunden wie vernäht sind, wobei die unterste Lage 50 von einer Basisschicht oder -lage 58 ausgeht, die bei den weiteren Bearbeitungsschritten vorhanden sein kann. Dies ist jedoch nicht zwingend erforderlich. Vielmehr kann die Basisschicht 58 auch zuvor entfernt werden.

Die Schichten 50, 52, 54 und 56 sind in Bezug auf die Verlegerichtung der Verstärkungsfasern derart ausgelegt, dass die äußeren Schichten 50, 56 radial verlaufende Verstärkungsfasern und die inneren Schichten 52, 54 evolventenförmig verlaufende Verstärkungsfasern enthalten bzw. aus diesen aufgebaut sind.

Die Bremsscheibe weist zwei aus Preformen hergestellte und über Stege beabstandete Reibringe auf, die einen grundsätzlichen Aufbau aufweisen, der der Preform 48 entspricht.

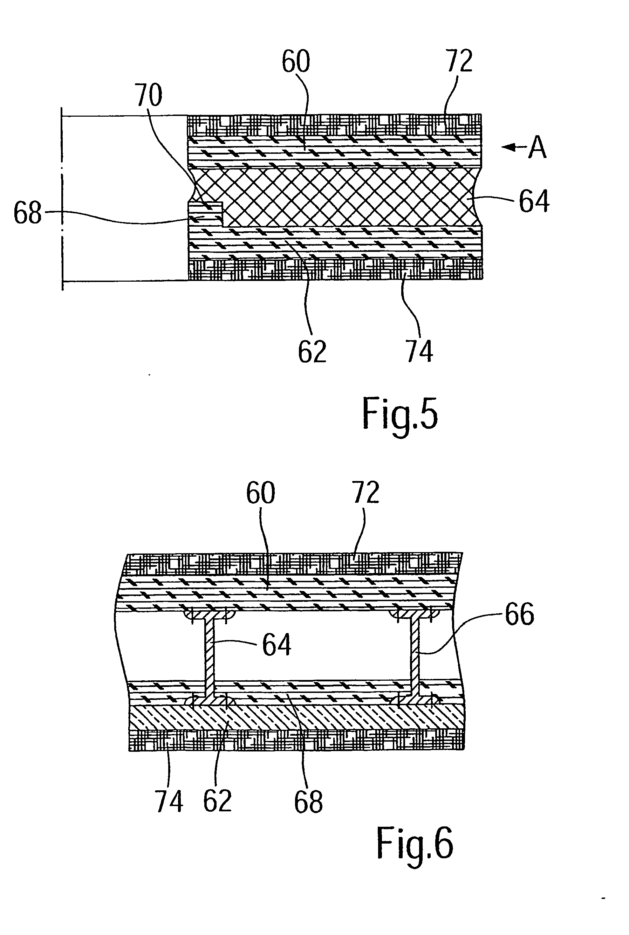

In den Fig. 4 und 5 wird zur Herstellung einer innenbelüfteten Bremsscheibe eine äußere Preform 60 mit einer inneren Preform 42 über Stege 64, 66 verbunden wie insbesondere vernäht. Dabei ist der Aufbau einer jeden Preform 60, 62 erwähntermaßen entsprechend dem der Preform 48 mit der Einschränkung, dass die untere Preform 62, d. h. diejenige, aus der die untere Reibschicht der Bremsscheibe gebildet wird, eine innenseitig verlaufende Aufdickung 68 aufweist, in der die Fasern zueinander kreuzend um einen Winkel von in etwa 45° verlegt sind. Der jeweilige Steg 64, 66 weist in diesem inneren Randbereich, der durch die Aufdickung 68 gebildet ist, einen entsprechenden. Ausschnitt 70 auf, um formschlüssig auf der unteren Preform 62 aufzuliegen.

Die Stege 64, 66 bestehen ebenfalls - wie die Schnittdarstellung gemäß Fig. 4 andeutet aus einer Kreuzfaserstruktur, wobei die Fasern sich unter einem Winkel von in etwa 45° schneiden. Die Stege 64, 66 sind dabei als Preform auf ein Faservorvolumen von 48 % verrzäht. Ferner ist den Fig. 4 und 5 zu entnehmen, dass auf den Außenflächen der Preformen 60, 62 Schichten wie Vliesschichlen 72, 74 angeordnet sind. Alle, d. h. die Preformen 60, 62, die Stege 64, 66 sowie die Vliesschichten 72, 74 sind zu einer Gesamtstruktur vernäht und bilden die spätere Bremsscheibe.

Die so gebildete Gesamtstruktur wird sodann in einem Harzbad mit Phenolharz imprägniert. Anschließend werden zwischen die Stege - im Ausführungsbeispiel 12 - verlorene Kerne basierend auf einem hochgefüllten Polymer mit Hilfe einer Spannvorrichtung eingebracht und mit einem Spannband fixiert. Ein entsprechend vorbereiteter Körper wird anschließend unter einem Druck von ca. 4 bar und bei einer Temperatur von ca. 120 °C warmgepresst. Während einer nachgeschalteten Temperaturbehandlung von ca. 250 °C werden die Keme entfernt. Anschließend erfolgt eine Pyrolyse bei ca. 1000 °C, wobei zuvor die Kühlkanäle mit wiederverwendbaren Graphitkemen stabilisiert werden.

Anzumerken ist, dass die Vliese 72, 74, die aus C-Monofilamenten und eine C-haltigen Füllstoff bestehen können, vor oder nach dem Imprägnieren auf die Außenfläche der TFP-Preformen 60, 62 aufgebracht sein können.

Nach der Pyrolyse erfolgt eine Erstbearbeitung mit Aufmaßung von 0,5 bis 1 mm sowie das Freidrehen des Befestigungsbereichs der aus der Preform 62 mit Vlies 74 gebildeten unteren Reibscheibe.

Die Silizierung der pyrolysierten Struktur wird in einem Kapillarprozess bei Temperaturen von ca. 1500 °C durchgeführt.

Eine so hergestellte Bremsscheibe nimmt während der Silizierung 50 Gew.% Silizium auf. Die Dichte der Bremsscheibe beträgt in etwa 1,96 g/cm³ und weist eine offene Porosität von ca. 4,5 % auf.

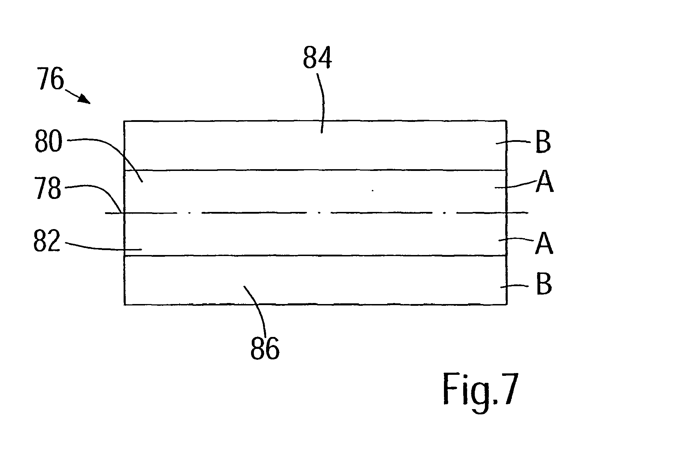

In Fig. 7 ist rein prinzipiell ein Querschnitt durch eine TFP-Preform 76 wiedergegeben, um zu verdeutlichen, dass diese in Bezug auf ihre Mittensyrnmetrieebene 78 gleich aufgebaut sein sollte. So grenzen zu jeder Seite der Mittensymmetrieebene 78 Lagen oder Schichten 80, 82 an, die in Bezug auf ihre Fasern eine gleiche Orientierung A aufweisen. Die angrenzenden äußeren Schichten oder Lagen 84, 86 zeigen zwar eine abweichende Orientierung zu der der Lagen 80, 82, weisen ihrerseits jedoch eine gleiche Lagenorientierung auf, wie durch die Kennzeichnung B verdeutlicht werden soll.

In den Schichten 80, 82 können die Fasern radial orientiert sein. In den äußeren Schichten 84, 86 kann ein kreisringfönniger, evolventenförmiger oder tangentialer Verlauf vorgesehen sein.

Durch die diesbezüglichen Maßnahmen bzw. Symmetrie zu der Mittensymmetrieebene 78 ist sichergestellt, bis das fertige tribologische Bauteil verzugs- und verwindungsfrei ist.

Eine Symmetrie kann auch dadurch erzielt werden, dass äußere Schichten bearbeitet werden in einem Umfang, bis die gewünschte gleiche Faserorientierung vorliegt.

Als tribologische Bauteile kommen nicht nur Brems- und Kupplungsscheiben, sondern auch Reibbelege, Gleitbelege, Dicht- und Gleitringe, Gleithülsen, Schieber, Gleitlager, Kugel- und Wälzlager in Frage, um nur einige weitere Beispiele zu nennen.

## Patentansprüche

1. Verfahren zur Herstellung eines tribologischen Faserverbundbauteils umfassend die Verfahrensschritte:
- Herstellen zumindest einer Preform durch auf einer Basisschicht (56, 58) auf Kohlenstoffbasis, Aramid- und/oder Keramikfaserbasis und/oder einem Vlies beanspruchungsgerecht abgelegten Verstärkungsfasern,
- Aufnähen der Verstärkungsfasern auf die Basisschicht (TFP-Preform),
- Ausbilden einer dem Faserverbundbauteil entsprechenden Struktur aus einer oder mehreren entsprechend hergestellten TFP-Preformen,
- Stabilisieren der Struktur durch Materialabscheidung aus der Gasphase und/oder
- Imprägnieren der Struktur mit einem Monomer und/oder einem. Polymer sowie anschließendes Härten und Pyrolysieren.

2. Verfahren nach Anspruch 1,
**dadurch gekennzeichnet,**
**dass** die Struktur durch insbesondere CVI-Abscheidung mit z. B. C, SiC, B₄C und/oder Si stabilisiert wird.

3. Verfahren nach Anspruch 1 oder 2,
**dadurch gekennzeichnet,**
**dass** die Struktur nach der Pyrolyse sitiziert wird.

4. Verfahren nach zumindest einem der vorhergehenden Ansprüche,
**dadurch gekennzeichnet,**
**dass** die zumindest eine TFP-Preform (10, 26, 28, 36, 48, 60, 62, 76) Bereiche oder Schichten aufweist, die in ihrem Faservolumen und/oder ihrer Ablagedichte und/oder ihrer Faserlänge und/oder ihrer Faserverlcgenchtung voneinander abweichen.

5. Verfahren nach zumindest einem der vorhergehenden Ansprüche,
**dadurch gekennzeichnet,**
**dass** die Struktur aus zumindest zwei TFP-Preformen (26, 28, 60, 62)gebildet wird, die vorzugsweise gleich oder im Wesentlichen gleich aufgebaut werden.

6. Verfahren nach zumindest einem der vorhergehenden Ansprüche,
**dadurch gekennzeichnet,**
**dass** die Struktur mit gegebenenfalls mit Kernen verschenen Aussparungen und/oder Kanälen versehen wird.

7. Verfahren nach zumindest einem der vorhergehenden Ansprüche,
**dadurch gekennzeichnet,**
**dass** das Faserverbundbauteil aus einem Verbund aus zumindest einer TFP-Preform (60, 62) und einem Gelege und/oder Gewebe und/oder Kurzfasern und/oder Filz und/oder Vlies (72, 74) hergestellt wird.

8. Verfahren nach zumindest einem der vorhergehenden Ansprüche,
**dadurch gekennzeichnet,**
**dass** die TFP-Preform (60, 62) außenseitig mit einer Schicht (72, 74) aus Kurzfasern versehen wird.

9. Verfahren nach zumindest einem der vorhergehenden Ansprüche,
**dadurch gekennzeichnet,**
**dass** die TTP-Preform (10, 26, 28, 36, 48, 60, 62, 76) mit Rovings mit voneinander abweichender Fadenzahl versehen wird.

10. Verfahren nach zumindest einem der vorhergehenden Ansprüche,
**dadurch gekennzeichnet,**
**dass** die TFP-Preform (10, 26, 28, 36, 48, 60, 62, 76) mit Verstärkungsfasern in Form von Rovingsträngen bzw. Faserbändern versehen wird.

11. Verfahren nach zumindest einem der vorhergehenden Ansprüche,
**dadurch gekennzeichnet,**
**dass** die TFP-Preform (10, 26, 28, 36, 48, 60, 62, 76) mit Verstärkungsfasern in Form von Natur-, Glas-, Aramid-, Kohlenstoff und/oder Keramikfasern versehen wird.

12. Verfahren nach zumindest einem der vorhergehenden Ansprüche,
**dadurch gekennzeichnet,**
**dass** die TFP-Preform (36, 48, 76) aus mehreren Schichten (38, 40, 42, 44, 50, 52, 56, 80, 82, 84, 86) verlegter Verstärkungsfasern gebildet wird, wobei Verlegerichtung der Verstärkungsfasern aufeinanderfolgender Schichten voneinander abweichen.

13. Verfahren nach zumindest Anspruch 12,
**dadurch gekennzeichnet,**
**dass** die Verstärkungsfasern in einer Schicht (38, 42, 50, 56) radial verlaufend verlegt werden.

14. Verfahren nach zumindest Anspruch 12,
**dadurch gekennzeichnet,**
**dass** die Verstärkungsfasern in einer Schicht (40, 44) kreisrinförmig verlaufend verlegt werden.

15. Verfahren nach zumindest Anspruch 12,
**dadurch gekennzeichnet,**
**dass** die Verstärkungsfasern in einer Schicht (52, 54) evolventenformig verlaufend verlegt werden.

16. Verfahren nach zumindest Anspruch 12,
**dadurch gekennzeichnet,**
**dass** die Verstärkungsfasern in einer Schicht ausgehend von deren mittlerer Öffnung zu dieser tangential verlaufend verlegt werden.

17. Verfahren nach zumindest einem der vorhergehenden Ansprüche,
**dadurch gekennzeichnet,**
**dass** die Verstärkungsfasern derart verlegt werden, dass bei einer kreisscheibenförmigen TFP-Preform (10, 26, 28, 36, 48, 60, 62, 76) die pyrolysierte Preform in ihrer radialen Abmessung der der Preform entspricht oder weitgehend entspricht.

18. Verfahren nach zumindest einem der vorhergehenden Ansprüche,
**dadurch gekennzeichnet,**
**dass** die Verstärkungsfasern mit Polymerfasem und/oder Kohlenstofff-asem vernäht werden.

19. Verfahren nach zumindest einem der vorhergehenden Ansprüche,
**dadurch gekennzeichnet,**
**dass** die Struktur einer Kupplungsscheibe durch zumindest zwei TFP-Preformen (36, 48) gleichen oder im Wesentlieben gleichen Aufbaus ausgebildet wird.

20. Verfahren nach zumindest einem der vorhergehenden Ansprüche,
**dadurch gekennzeichnet,**
**dass** die TFP-Preform (48, 76) aus mehreren Schichten (50, 52, 54, 80, 82, 84, 86) ausgebildet wird, wobei die Schichten in ihrer Faserorientierung symmetrisch oder im Wesentlichen symmetrisch zur Mittensymmetrieebene (78) der TFP-Preform verlegt werden.

21. Verfahren nach zumindest einem der vorhergehenden Ansprüche,
**dadurch gekennzeichnet,**
**dass** die TFP-Preform (36, 48) aus zumindest zwei Schichten (38, 40, 42, 44, 50, 52, 54, 56) oder Lagen ausgebildet wird, wobei eine der Schichten bzw. Lagen (38, 42) aus radial verlegten Verstärrkungsfasem und die verbleibende Schicht oder Lage (40, 44) aus ringf-ornriig verlegten Verstärkungsfasern aufgebaut wird.

22. Verfahren nach zumindest einem der vorhergebenden Ansprüche,
**dadurch gekennzeichnet,**
**dass** übereinander angeordnete Schichten oder Lagen (38, 40, 42, 44, 50, 52, 54, 56) der TFP-Preform jeweils mit der Basisschicht (46,58) vernäht werden.

23. Verfahren nach zumindest einem der vorhergehenden Ansprüche,
**dadurch gekennzeichnet,**
**dass** die TFP-Preform (48, 76) in ihren Außenflächen bzw. -schichten (50, 56, 84, 86) mit Fasern gleicher oder im Wesentlichen gleicher Orientierung versehen werden.

24. Verfahren nach zumindest einem der vorhergehenden Ansprüche,
**dadurch gekennzeichnet,**
**dass** die Struktur einer Bremsscheibe durch zumindest zwei zueinander beabstandeten TFP-Preformen (26, 28, 60, 62) gebildet wird, die über aus Verstärkungsfasern gebildete Stege (30, 32, 34, 44, 46) verbunden werden.

25. Verfahren nach zumindest einem der vorhergehenden Ansprüche,
**dadurch gekennzeichnet,**
**dass** in der TFP-Preform (62) im Bereich eines Krafteinleitungspunktes eine durch Verstärkungsfasern gebildete Verdickung (68) ausgebildet wird.

26. Verfahren nach zumindest Anspruch 25,
**dadurch gekennzeichnet,**
**dass** die Verstärkungsfasern in der Verdickung (68) sich kreuzend verlegt werden.

27. Verfahren nach zumindest Anspruch 24,
**dadurch gekennzeichnet,**
**dass** die Verstärkungsfasern in den Stegen (64, 66) sich kreuzend verlegt werden.

28. Verfahren nach zumindest einem der vorhergehenden Ansprüche,
**dadurch gekennzeichnet,**
**dass** die TFP-Preform (60, 62) auf ihrer freien Außenfläche mit einer Vliesschicht (72, 74) versehen wird.

29. Tribologisehes Faserverbundbauteil umfassend eine Struktur mit zumindest einer Preform bestehend aus auf einer Basisschicht (56, 58) auf Kohlenstoffbasis, Aramid- und/oder Keraniikfaser-basis und/oder einem Vlies beanspruchungsgerecht abgelegten und mit der Basisschicht verbundenen Verstärkungsfasern, wobei die Struktur durch Malerialabscheidung aus der Gasphase stabilisiert und/oder mit einem Monomer und/oder Polymer versehen, gehärtet und pyrolysiert ist,
**dadurch gekennzeichnet,**
**dass** die Verstärkungsfasern auf der Basisschicht (56, 58) aufgenähr sind.

30. Faserverbundbauteil nach AnspTucb 29,
**dadurch gekennzeichnet,**
**dass** die Struktur durch insbesondere CVI-Abscheidung mit z B. C, SiC, B₄C und/oder Si stabilisiert ist.

31. Faserverbundbauteil nach Anspruch 29 oder 30,
**dadurch gekennzeichnet,**
**dass** die Struktur nach der Pyrolyse siliziert ist.

32. Faserverbundbauteil nach zumindest einem der Ansprüche 29 bis 31,
**dadurch gekennzeichnet,**
**dass** die zumindest eine TFP-Preform (10, 26, 28, 36, 48, 60, 62, 76) aus Bereichen oder Schichten besteht, die in ihrem Faservolumen und/oder ihrer Ablagedichte und/oder ihrer Faserlänge und/oder ihrer Faserverlegerichtung voneinander abweichen.

33. Faserverbundbauteil nach zumindest einem der Ansprüche 29 bis 32,
**dadurch gekennzeichnet,**
**dass** die Struktur zumindest zwei TFP-Preformen (26, 28, 60, 62) aufweist, die vorzugsweise gleich oder im Wesentlichen gleich aufgebaut sind.

34. Faserverbundbauteil nach zumindest einem der Ansprüche 29 bis 33,
**dadurch gekennzeichnet,**
**dass** die Struktur gegebenenfalls mit Kernen versehene Aussparungen und/oder Kanäle aufweist.

35. Faserverbundbauteil nach zumindest einem der Ansprüche 29 bis 34,
**dadurch gekennzeichnet,**
**dass** das Faserverbundbauteil aus einem Verbund aus zumindest einer TFP-Preform (60, 62) und einem Gelege und/oder Gewebe und/oder Kurzfasern und/oder Filz und/oder Vlies (72, 74) bestebt 9.

36. Faserverbundbauteil nach zumindest einem der Ansprüche 29 bis 35,
**dadurch gekennzeichnet,**
**dass** die TFP-Preform (60, 62) außenseitig mit einer Schicht (72, 74) aus Kurzfasern versehen ist.

37. Fäserverbundbauteil nach zumindest einem der Ansprüche 29 bis 36,
**dadurch gekennzeichnet,**
**dass** die TFP-Preform (10, 26, 28, 36, 48, 60, 62, 76) Rovings mit voneinander abweichender Fadenzahl aufweist.

38. Fäserverbundbauteil nach zumindest einem der Ansprüche 29 bis 37,
**dadurch gekennzeichnet,**
**dass** die TFP-Preform (10, 26, 28, 36, 48, 60, 62, 76) Verstärkungsfasern in Form von Rovingsträngen bzw. Faserbändern aufweist.

39. Faserverbundbauteil nach zumindest einem der Ansprüche 29 bis 38,
**dadurch gekennzeichnet,**
**dass** die TFP-Preform (10, 26, 28, 36, 48, 60, 62, 76) Verstärkungsfasern in Form von Natur-, Glas-, Aramid-, Kohlenstoff- und/oder Keramikfasern aufweist.

40. Faserverbundbauteil nach zumindest einem der Ansprüche 29 bis 39,
**dadurch gekennzeichnet,**
**dass** die TFP-Preform (36, 48, 76) aus mehreren Schichten (38, 40, 42, 44, 50, 52, 56, 80, 82, 84, 86) verlegter Verstärkungsfasern besteht, wobei Verlegerichtung der Verstärkungsfasern aufeirtandelfolgender Schichten voneinander abweichen.

41. Faserverbundbauteil nach zumindest Anspruch 40,
**dadurch gekennzeichnet,**
**dass** die Verstärkungsfasern in einer Schicht (38, 42, 50, 56) radial verlaufen.

42. Faserverbundbauteil nach zumindest Anspruch 40,
**dadurch gekennzeichnet,**
**dass** die Verstärkungsfasern in einer Schicht (40, 44) kreisringförmig verlaufen.

43. Faserverbundbauteil nach zumindest Anspruch 40,
**dadurch gekennzeichnet,**
**dass** die Verstärkungsfasern in einer Schicht (52, 54) evolventenförmig verlaufen.

44. Faserverbundbauteil nach zumindest Anspruch 40,
**dadurch gekennzeichnet,**
**dass** die Verstärkungsfasern (16) in einer Schicht ausgehend von deren mittlerer Ofmung zu dieser tangential verlaufen.

45. Faserverbundbauteil nach zumindest einem der Ansprüche 29 bis 44,
**dadurch gekennzeichnet,**
**dass** die Verstärkungsfäsern derart verlegt sind, dass bei einer kreisscheibenförmigen TFP-Preform (10, 26, 28, 36, 48, 60, 62, 76) die pyrolysierte Preform in ihrer radialen Abmessung der der Preform entspricht oder weitgehend entspricht.

46. Faserverbundbauteil nach zumindest einem der Ansprüche 29 bis 45,
**dadurch gekennzeichnet,**
**dass** die Verstärkungsfasern mit Polymnerfasern und/oder Kohlenstofffasern vernäht sind.

47. Faserverbundbauteil nach zumindest einem der Ansprüche 29 bis 46,
**dadurch gekennzeichnet,**
**dass** die Struktur einer Kupplungsscheibe aus zumindest zwei TFP-Preformen (36, 48) gleichen oder im Wesentlichen gleichen Aufbaus besteht.

48. Faserverbundbauteil nach zumindest einem der Ansprüche 29 bis 47,
**dadurch gekennzeichnet,**
**dass** die TFP-Preform (48, 76) aus mehreren Schichten (50, 52, 54, 80, 82, 84, 86) besteht, wobei die Schichten in ihrer Faserorientierung symmetrisch oder im Wesentlichen symmetrisch zur Mittensymmetriecbene (78) der TFP-Preform verlegt sind.

49. Faserverbundbauteil nach zumindest einem der Ansprüche 29 bis 48,
**dadurch gekennzeichnet,**
**dass** die TFP-Preform (36, 48) aus zumindest zwei Schichten (38, 40, 42, 44, 50, 52, 54, 56) oder Lagen besteht, wobei eine der Schichten bzw. Lagen (38, 42) aus radial verlegten Verstärkungsfasern und die verbleibende Schicht oder Lage (40, 44) aus ringförmig verlegten Verstärkungsfasern aufgebaut ist.

50. Fasmerbundbauteil nach zumindest einem der Ansprüche 29 bis 49,
**dadurch gekennzeichnet,**
**dass** übereinander angeordnete Schichten oder Lagen (38, 40, 42, 44, 50, 52, 54, 56) der TFP-Preform jeweils mit der Basisschicht (46, 58) vernäht sind.

51. Faserverbundbauteil nach zumindest einem der Ansprüche 29 bis 50,
**dadurch gekennzeichnet,**
**dass** die TFP-Preform (48, 76) in ihren Außenflächen bzw. schichten (50, 56, 84, 86) Fasern gleicher oder im Wesentlichen gleicher Orientierung aufweist.

52. Faserverbundbauteil nach zumindest einem der Ansprüche 29 bis 51,
**dadurch gekennzeichnet,**
**dass** die Struktur einer Bremsscheibe aus zumindest zwei zueinander beabstandeten TFP-Preformen (26, 28, 60, 62) besteht, die über aus Verslärkungsfasern gebildete Stege (30, 32, 34, 44, 46) verbunden sind.

53. Faserverbundbauteil nach zumindest einem der Ansprüche 29 bis 52,
**dadurch gekennzeichnet,**
**dass** die TFP-Preform (62) im Bereich eines Krafteinleitungspunkies eine durch Verstärkungsfasern gebildete Verdickung (68) aufweist.

54. Faserverbundbauteil nach zumindest Anspruch 53,
**dadurch gekennzeichnet,**
**dass** in der Verdickung (68) die Verstärkungsfasern sich kreuzend verlegt sind.

55. Faserverbundbauteil nach zumindest Anspruch 52,
**dadurch gekennzeichnet,**
**dass** in den Stegen (64, 66) die Verstärkungsfasern sich kreuzend verlegt sind.

56. Feserverbundbauteil nach zumindest einem der Ansprüche 29 bis 55,
**dadurch gekennzeichnet,**
**dass** die TFP-Preform (60, 62) auf ihrer freien Außenfläche eine Vliesschicht (72, 74) aufweist.

## Claims

1. Method for producing a tribological fiber composite component comprising the method steps:
- producing at least one preform by reinforcing fibers deposited on a base layer (56, 58) based on carbon, aramide and/or ceramic fibers and/or a fleece so as to be stressable,
- stitching the reinforcing fibers on the base layer (TFP preform),
- forming a structure, corresponding to the fiber composite component, of one or more TFP preforms produced in a corresponding manner,
- stabilizing the structure by material deposition from the gas phase, and/or
- impregnating the structure with a monomer and/or a polymer as well as subsequent hardening and pyrolyzing.

2. The method according to claim 1,
**characterized in**
**that** the structure is stabilized, in particular, by CVI deposition with e.g. C, SiC, B₄C and/or Si.

3. The method according to claim 1 or 2,
**characterized in**
**that** the structure is siliconized after the pyrolysis.

4. The method according to at least one of the preceding claims,
**characterized in**
**that** the at least one TFP preform (10, 26, 28, 36, 48, 60, 62, 76) consists of areas or layers which differ from one another in their fiber volumes and/or their layer density and/or their fiber lengths and/or their fiber placement direction.

5. The method according to at least one of the preceding claims,
**characterized in**
**that** the structure is formed from at least two TFP preforms (26, 28, 60, 62) which are preferably constructed the same or essentially the same.

6. The method according to at least one of the preceding claims,
**characterized in**
**that** the structure is provided with recesses and/or channels optionally provided with cores.

7. The method according to at least one of the preceding claims,
**characterized in**
**that** the fiber composite component is produced from a composite of at least one TFP preform (60, 62) and a layer and/or fabric and/or short fibers and/or felt and/or fleece (72, 74).

8. The method according to at least one of the preceding claims,
**characterized in**
**that** the TFP preform (60, 62) is provided with a layer (72, 74) of short fibers on the outside.

9. The method according to at least one of the preceding claims,
**characterized in**
**that** the TFP preform (10, 26, 28, 36, 48, 60, 62, 76) is provided with rovings with different thread counts.

10. The method according to at least one of the preceding claims,
**characterized in**
**that** the TFP preform (10, 26, 28, 36, 48, 60, 62, 76) has reinforcing fibers in the form of roving strands or fiber bands.

11. The method according to at least one of the preceding claims,
**characterized in**
**that** the TFP preform (10, 26, 28, 36, 48, 60, 62, 76) is provided with reinforcing fibers in the form of natural, glass, aramide, carbon and/or ceramic fibers.

12. The method according to at least one of the preceding claims,
**characterized in**
**that** the TFP preform (36, 48, 76) is formed from several layers (38, 40, 42, 44, 50, 52, 56, 80, 82, 84, 86) of placed reinforcing layers, the direction of placement of the reinforcing fibers differing from one another in successive layers.

13. The method according to claim 12,
**characterized in**
**that** the reinforcing fibers are placed so as to extend radially in a layer (38, 42, 50, 56).

14. The method according to claim 12,
**characterized in**
**that** the reinforcing fibers are placed so as to extend in a circular manner in a layer (40,44).

15. The method according to claim 12,
**characterized in**
**that** the reinforcing fibers are placed so as to extend involutely in a layer (52, 54).

16. The method according to claim 12,
**characterized in**
**that** the reinforcing fibers are placed in a layer extending from their central opening tangentially thereof.

17. The method according to at least one of the preceding claims,
**characterized in**
**that** in a circular TFP preform (10, 26, 28, 36, 48, 60, 62, 76), the reinforcing fibers are placed in such a way that the pyrolyzed preform corresponds, or substantially corresponds, in its radial measurement to that of the preform.

18. The method according to at least one of the preceding claims,
**characterized in**
**that** the reinforcing fibers are stitched together with polymer fibers and/or carbon fibers.

19. The method according to at least one of the preceding claims,
**characterized in**
**that** the structure of a clutch disk is formed from at least two TFP preforms (36, 48) having the same, or essentially the same, structure.

20. The method according to at least one of the preceding claims,
**characterized in**
**that** the TFP preform (48, 76) is formed from several layers (50, 52, 54, 80, 82, 84, 86), the layers being placed symmetrically or substantially symmetrically with respect to the central symmetrical plane (78) of the TFP preform in their fiber orientation.

21. The method according to at least one of the preceding claims,
**characterized in**
**that** the TFP preform (36, 48) is formed from at least two layers (38, 40, 42, 44, 50, 52, 54, 56) or plies, one of the layers or plies (38, 42) being formed from radially placed reinforcing fibers and the remaining layer or ply (40, 44) of reinforcing fibers placed in a circular manner.

22. The method according to at least one of the preceding claims,
**characterized in**
**that** superimposing layers or plies (38, 40, 42, 44, 50, 52, 54, 56) of the TFP preform are each stitched to the base layer (46, 58).

23. The method according to at least one of the preceding claims,
**characterized in**
**that** the TFP preforms (48, 76) are provided with fibers of the same or substantially the same orientation in their outer surfaces or layers (50, 56, 84, 86).

24. The method according to at least one of the preceding claims,
**characterized in**
**that** the structure of a brake disk is formed from at least two TFP preforms (26, 28, 60, 62) spaced from one another, which are connected to one another by webs (30, 32, 34, 44, 46) formed from reinforcing fibers.

25. The method according to at least one of the preceding claims,
**characterized in**
**that** a thickening (68) formed by reinforcing fibers is formed in the TFP preform (62) in the area of a force input point.

26. The method according to claim 25,
**characterized in**
**that** the reinforcing fibers are placed in the thickening (68) so as to cross one another.

27. The method according to claim 24,
**characterized in**
**that** the reinforcing fibers are placed in the webs (64, 66) so as to cross one another.

28. The method according to at least one of the preceding claims,
**characterized in**
**that** the TFP preform (60, 62) is provided with a fleece layer (72, 74) on its free outer surface.

29. A tribological fiber composite component comprising a structure with at least one preform consisting of reinforcing fibers deposited on a base layer (56, 58) based on carbon, aramide and/or ceramic fibers and/or a fleece so as to be stressable and connected with the base layer, the structure being stabilized by deposition of material from the gas phase and/or provided with a monomer and/or polymer, is hardened and pyrolyzed,
**characterized in**
**that** the reinforcing fibers are stitched onto the base layer (56, 58).

30. The fiber composite component according to claim 29,
**characterized in**
**that** the structure is stabilized, in particular, by CVI deposition with e.g. C, SiC, B₄C and/or Si.

31. The fiber composite component according to claim 29 or 30,
**characterized in**
**that** the structure is siliconized after the pyrolysis.

32. The fiber composite component according to at least one of the claims 29 to 31,
**characterized in**
**that** the at least one TFP preform (10, 26, 28, 36, 48, 60, 62, 76) consists of areas or layers which differ from one another in their fiber volumes and/or their deposition density and/or their fiber lengths and/or their fiber placement direction.

33. The fiber composite component according to at least one of the claims 29 to 32,
**characterized in**
**that** the structure has at least two TFP preforms (26, 28, 60, 62) which are preferably constructed the same or substantially the same.

34. The fiber composite component according to at least one of the claims 29 to 33,
**characterized in**
**that** the structure has recesses and/or channels, which are optionally provided with cores.

35. The fiber composite component according to at least one of the claims 29 to 34,
**characterized in**
**that** the fiber composite component consists of a composite of at least one TFP preform (60, 62) and a layer and/or fabric and/or short fibers and/or felt and/or fleece (72, 74).

36. The fiber composite component according to at least one of the claims 29 to 35,
**characterized in**
**that** the TFP preform (60, 62) is provided with a layer (72, 74) of short fibers on the outside.

37. The fiber composite component according to at least one of the claims 29 to 36,
**characterized in**
**that** the TFP preform (10, 26, 28, 36, 48, 60, 62, 76) has rovings with different thread counts.

38. The fiber composite component according to at least one of the claims 29 to 37,
**characterized in**
**that** the TFP preform (10, 26, 28, 36, 48, 60, 62, 76) has reinforcing fibers in the form of roving strands or fiber bands.

39. The fiber composite component according to at least one of the claims 29 to 38,
**characterized in**
**that** the TFP preform (10, 26, 28, 36, 48, 60, 62, 76) has reinforcing fibers in the form of natural, glass, aramide, carbon and/or ceramic fibers.

40. The fiber composite component according to at least one of the claims 29 to 39,
**characterized in**
**that** the TFP preform (36, 48, 76) comprises a plurality of layers (38, 40, 42, 44, 50, 52, 56, 80, 82, 84, 86) of placed reinforcing fibers, the direction of placement of the reinforcing fibers differing from one another in successive layers.

41. The fiber composite component according to at least claim 40,
**characterized in**
**that** the reinforcing fibers extend radially in a layer (34, 42, 50, 56).

42. The fiber composite component according to at least claim 40,
**characterized in**
**that** the reinforcing fibers extend in a circular manner in a layer (40, 44).

43. The fiber composite component according to at least claim 40,
**characterized in**
**that** the reinforcing fibers extend involutely in a layer (52, 54).

44. The fiber composite component according to at least claim 40,
**characterized in**
**that** the reinforcing fibers (16) extend in a layer extending from its central opening tangentially thereof.

45. The fiber composite component according to at least one of the claims 29 to 44,
**characterized in**
**that** the reinforcing fibers are placed in such a way that, in a circular TFP preform (10, 26, 28, 36, 48, 60, 62, 76), the pyrolyzed preform corresponds, or substantially corresponds, in its radial measurement to that of the preform.

46. The fiber composite component according to at least one of the claims 29 to 45,
**characterized in**
**that** the reinforcing fibers are stitched together with polymer fibers and/or carbon fibers.

47. The fiber composite component according to at least one of the claims 29 to 46,
**characterized in**
**that** the structure of a clutch disk comprises at least two TFP preforms (36, 48) having the same, or substantially the same, structure.

48. The fiber composite component according to at least one of the claims 29 to 47,
**characterized in**
**that** the TFP preform (48, 76) comprises several layers (50, 52, 54, 80, 82, 84, 86) placed symmetrically or substantially symmetrically with respect to the central symmetrical plane (78) of the TFP preform in their fiber orientation.

49. The fiber composite component according to at least one of the claims 29 to 48,
**characterized in**
**that** the TFP preform (36, 48) consists of at least two layers (38, 40, 42, 44, 50, 52, 54, 56) or plies, one of the layers or plies (38, 42) being formed from radially placed reinforcing fibers and the remaining layer or ply (40, 44) of reinforcing fibers placed in a circular manner.

50. The fiber composite component according to at least one of the claims 29 to 49,
**characterized in**
**that** superimposing layers or plies (38, 40, 42, 44, 50, 52, 54, 56) of the TFP preform are each stitched to the base layer (46, 58).

51. The fiber composite component according to at least one of the claims 29 to 50,
**characterized in**
**that** the TFP preform (48, 76) has fibers of the same or substantially the same orientation in its outer surfaces or layers (50, 56, 84, 86).

52. The fiber composite component according to at least one of the claims 29 to 51,
**characterized in**
**that** the structure of a brake disk consists of at least two TFP preforms (26, 28, 60, 62) spaced from one another, which are connected to one another by webs (30, 32, 34, 44, 46) formed from reinforcing fibers.

53. The fiber composite component according to at least one of the claims 29 to 52,
**characterized in**
**that** the TFP preform (62) has a thickening (68) formed by reinforcing fibers in the area of a force input point.

54. The fiber composite component according to at least claim 53,
**characterized in**
**that** the reinforcing fibers are placed so as to cross one another in the thickening (68).

55. The fiber composite component according to at least claim 52,
**characterized in**
**that** the reinforcing fibers are placed so as to cross one another in the webs (64, 66).

56. The fiber composite component according to at least one of the claims 29 to 55,
**characterized in**
**that** the TFP preform (60, 62) has a fleece layer (72, 74) on its free outer surface.

## Revendications

1. Procédé de production d'un composant composite fibreux tribologique comprenant les étapes suivantes :
- réalisation d'au moins une préforme au moyen de fibres de renforcement déposées de manière à résister aux sollicitations sur une couche de base (56,58) à base de carbone, à base de fibres d'aramide et/ou de céramique et/ou d'un non-tissé,
- couture des fibres de renforcement sur la couche de base (préforme TFP),
- formation d'une structure correspondant au composant composite fibreux, constituée d'une ou plusieurs préformes TFP produites en conséquence,
- stabilisation de la structure par dépôt de matière en phase gazeuse, et/ou
- imprégnation de la structure avec un monomère et/ou un polymère, suivie d'un durcissement et d'une pyrolyse.

2. Procédé selon la revendication 1,
**caractérisé en ce que**
la structure est stabilisée par, en particulier, un dépôt CVI avec par exemple B, C, SiC, B₄C et/ou Si.

3. Procédé selon la revendication 1 ou 2
**caractérisé en ce que**
la structure est silicée après la pyrolyse.

4. Procédé selon au moins l'une quelconque des revendications précédentes,
**caractérisé en ce qu'**
au moins une préforme TFP (10, 26, 28, 36, 48, 60, 62, 76) comporte des parties ou des couches qui se différencient entre elles dans leur volume de fibres et/ou leur densité de dépôt et/ou leur longueur de fibres et/ou la direction de dépôt des fibres.

5. Procédé selon au moins l'une quelconque des revendications précédentes,
**caractérisé en ce que**
la structure est constituée d'au moins deux préformes TFP (26, 28, 60, 62) qui sont de préférence de construction identique ou presque identique.

6. Procédé selon au moins l'une quelconque des revendications précédentes,
**caractérisé en ce que**
la structure est pourvue d'évidements et/ou de canaux, le cas échéant constitués de noyaux.

7. Procédé selon au moins l'une quelconque des revendications précédentes,
**caractérisé en ce que**
le composant composite fibreux est produit à partir d'un composite constitué d'au moins une préforme TFP (50,62) et d'une nappe et/ou d'un tissu et/ou de fibres courtes et/ou de feutre et/ou d'un non-tissé (72, 74).

8. Procédé selon au moins l'une quelconque des revendications précédentes,
**caractérisé en ce que**
la préforme TFP (60,62) est pourvue extérieurement d'une couche (72,74) de fibres courtes.

9. Procédé selon au moins l'une quelconque des revendications précédentes,
**caractérisé en ce que**
la préforme TFP (10, 26, 28, 36, 48, 60, 62, 76) est pourvue de stratifils comportant des nombres de fils différents les uns des autres.

10. Procédé selon au moins l'une quelconque des revendications précédentes,
**caractérisé en ce que**
la préforme TFP (10, 26, 28, 36, 48, 60, 62, 76) est pourvue de fibres de renforcement en forme de cordons de stratifils ou de bandes de fibres.

11. Procédé selon au moins l'une quelconque des revendications précédentes,
**caractérisé en ce que**
la préforme TFP (10, 26, 28, 36, 48, 60, 62, 76) est pourvue de fibres de renforcement en forme de fibres naturelles, de verre, d'aramide, de carbone et/ou de céramique.

12. Procédé selon au moins l'une quelconque des revendications précédentes,
**caractérisé en ce que**
la préforme TFP (36,48,76) est constituée de plusieurs couches (38, 40, 42, 44, 50, 52, 56, 80, 82, 84, 86) de fibres de renforcement déposées, les directions de dépôt des fibres de renforcement de couches successives s'écartant les unes des autres.

13. Procédé selon au moins la revendication 12,
**caractérisé en ce que**
les fibres de renforcement sont déposées en s'étendant radialement, en une couche (38, 42, 50, 56).

14. Procédé selon au moins la revendication 12,
**caractérisé en ce que**
les fibres de renforcement sont déposées en anneau, sur une couche (40, 44).

15. Procédé selon au moins la revendication 12,
**caractérisé en ce que**
les fibres de renforcement sont déposées en développante en une couche (52, 54).

16. Procédé selon au moins la revendication 12,
**caractérisé en ce que**
les fibres de renforcement (16) sont déposées en une couche en partant de leur ouverture centrale, tangentiellement à celle-ci.

17. Procédé selon au moins l'une quelconque des revendications précédentes,
**caractérisé en ce que**
les fibres de renforcement sont déposées de telle sorte que, dans le cas d'une préforme TFP en forme de disque (10, 26, 28, 36, 48, 60, 62-, 76), la préforme pyrolysée corresponde dans sa dimension radiale à celle de la préforme, ou lui corresponde largement.

18. Procédé selon au moins l'une quelconque des revendications précédentes,
**caractérisé en ce que**
les fibres de renforcement sont fermées par couture avec des fibres de polymère et /ou de carbone.

19. Procédé selon au moins l'une quelconque des revendications précédentes,
**caractérisé en ce que**
la structure d'un disque d'embrayage est constituée par au moins deux préformes TFP (36, 48) d'une construction identique ou presque identique.

20. Procédé selon au moins l'une quelconque des revendications précédentes,
**caractérisé en ce que**
la préforme TFP (48,76) est constituée de plusieurs couches (50, 52, 54, 80, 82, 84,86), ces couches étant déposées, dans leur orientation des fibres, symétriquement ou presque symétriquement par rapport au plan de symétrie médian (78) de la préforme TFP.

21. Procédé selon au moins l'une quelconque des revendications précédentes,
**caractérisé en ce que**
la préforme TFP (36, 48) est constituée d'au moins deux couches ou strates (38, 40, 42, 44, 50, 52, 54, 56) une des couches ou strates (38,42) étant constituée de fibres de renforcement déposées radialement et la couche ou strate restante (40, 44) étant constituée de fibres de renforcement déposées en anneau.

22. Procédé selon au moins l'une quelconque des revendications précédentes,
**caractérisé en ce que**
les couches ou strates superposées (38, 40, 42, 44, 50, 52, 54, 56) de la préforme TFP sont à chaque fois fermées par couture avec la couche de base (46, 58).

23. Procédé selon au moins l'une quelconque des revendications précédentes,
**caractérisé en ce que**
la préforme TFP (48, 76) est pourvue, dans ses surfaces ou couches extérieures (50, 56, 84, 86), de fibres d'orientation identique ou presque identique.

24. Procédé selon au moins l'une quelconque des revendications précédentes,
**caractérisé en ce que**
la structure d'un disque de frein est constituée par au moins deux préformes TFP écartées (26, 28, 60, 62), et reliées par des nervures constituées de fibres de renforcement (30, 32, 34, 44, 46).

25. Procédé selon au moins l'une quelconque des revendications précédentes,
**caractérisé en ce que**
dans la préforme TFP (62), dans la région d'un point d'application de la force, une partie épaissie (68) est formée par des fibres de renforcement.

26. Procédé selon la revendication 25,
**caractérisé en ce que**
les fibres de renforcement dans la partie épaissie (68) sont déposées de manière à se croiser.

27. Procédé selon la revendication 24,
**caractérisé en ce que**
les fibres de renforcement dans les nervures (64, 66) sont déposées de manière à se croiser.

28. Procédé selon au moins l'une quelconque des revendications précédentes,
**caractérisé en ce que**
la préforme (60, 62) est pourvue sur sa surface extérieure libre d'une couche de non-tissé (72,74).

29. Composant composite fibreux tribologique comportant une structure, avec au moins une préforme constituée de fibres de renforcement déposées de manière à résister aux sollicitations sur une couche de base (56,58) à base de carbone, à base de fibres d'aramide et/ou de céramique et/ou d'un non-tissé, et assemblées avec la couche de base, la structure étant stabilisée par dépôt de matière en phase gazeuse et/ou pourvue d'un monomère et/ou d'un polymère, durcie et pyrolysée,
**caractérisé en ce que**
les fibres de renforcement sont cousues sur la couche de base (56, 58).

30. Composant composite fibreux selon la revendication 29,
**caractérisé en ce que**
la structure est stabilisée par, en particulier, dépôt CVI avec par exemple B, C, SiC, B₄C et/ ou Si.

31. Composant composite fibreux selon la revendication 29 ou 30,
**caractérisé en ce que**
la structure est silicée après la pyrolyse.

32. Composant composite fibreux selon au moins une des 29 à 31,
**caractérisé en ce qu'**
au moins une préforme TFP (10, 26, 28, 36, 48, 60, 62, 76) est composée de parties ou de couches qui se différencient entre elles dans leur volume de fibres et/ou leur densité de dépôt et/ou la longueur des fibres et/ou la direction de dépôt des fibres.

33. Composant composite fibreux selon au moins l'une quelconque des revendications 29 à 32,
**caractérisé en ce que**
la structure présente au moins deux préformes TFP (26, 28, 60, 62) qui sont de préférence constitués de manière identique ou presque identique.

34. Composant composite fibreux selon au moins l'une quelconque des revendications 29 à 33,
**caractérisé en ce que**
la structure présente des évidements et/ou de canaux, le cas échéant pourvus de noyaux.

35. Composant composite fibreux selon au moins l'une quelconque des revendications 29 à 34,
**caractérisé en ce que**
ce composant composite fibreux est produit à partir d'un composite composé d'au moins une préforme TFP (60, 62) et d'une nappe et/ou d'un tissu et ou de fibres courtes et/ou de feutre et/ou d'un non-tissé (72, 74).

36. Composant composite fibreux selon au moins l'une quelconque des revendications 29 à 35,
**caractérisé en ce que**
la préforme TFP (60,62) est pourvue extérieurement d'une couche (72,74) de fibres courtes.

37. Composant composite fibreux selon au moins l'une quelconque des revendications 29 à 36,
**caractérisé en ce que**
la préforme TFP (10, 26, 28, 36, 48, 60, 62, 76) présente des stratifils comportant des nombres de fils différents les uns des autres.

38. Composant composite fibreux selon au moins l'une quelconque des revendications 29 à 37,
**caractérisé en ce que**
la préforme TFP (10, 26, 28, 36, 48, 60, 62, 76) présente des fibres de renforcement en forme de cordons de stratifils ou de bandes de fibres.

39. Composant composite fibreux selon au moins l'une quelconque des revendications 29 à 38,
**caractérisé en ce que**
la préforme TFP (10, 26, 28, 36, 48, 60, 62, 76) présente des fibres de renforcement en forme de fibres naturelles, de verre, d'aramide et de carbone et/ou de céramique.

40. Composant composite fibreux selon au moins l'une quelconque des revendications 29 à 39,
**caractérisé en ce que**
la préforme (38,48,76) est composée de plusieurs couches (38, 40, 42, 44, 50, 52, 56, 80, 82, 84, 86) de fibres de renforcement déposées, les directions de dépôt des fibres de renforcement de couches successives s'écartant les unes des autres.

41. Composant composite fibreux selon au moins la revendication 40,
**caractérisé en ce que**
les fibres de renforcement (38, 42, 50, 56) sont déposées dans le sens radial.

42. Composant composite fibreux selon au moins la revendication 40,
**caractérisé en ce que**
les fibres de renforcement sont déposées en anneau en une couche (40, 44).

43. Composant composite fibreux selon au moins la revendication 40,
**caractérisé en ce que**
les fibres de renforcement sont déposées en développante en une couche (52, 54).

44. Composant composite fibreux selon au moins la revendication 40,
**caractérisé en ce que**
les fibres de renforcement (16) sont déposées en une couche en partant de leur ouverture médiane tangentiellement à celle-ci.

45. Composant composite fibreux selon au moins l'une quelconque des revendications 29 à 44,
**caractérisé en ce que**
les fibres de renforcement sont déposées de telle sorte que dans d'une préforme TFP en forme de disque (10, 26, 28, 36, 48, 60, 62, 76) la préforme pyrolysée corresponde dans sa dimension radiale à celle de la préforme, ou lui corresponde largement.

46. Composant composite fibreux selon au moins l'une quelconque des revendications 29 à 45,
**caractérisé en ce que**
les fibres de renforcement sont fermées par couture avec des fibres de polymère et /ou de carbonbe.

47. Composant composite fibreux selon au moins l'une quelconque des revendications 29 à 46,
**caractérisé en ce que**
la structure d'un disque d'embrayage est constituée par au moins deux préformes TFP (36, 48) d'une construction identique ou presque identique.

48. Composant composite fibreux selon au moins l'une quelconque des revendications 29 à 47,
**caractérisé en ce que**
la préforme TFP (48,76) est composée de plusieurs couches (50, 52, 54, 80, 82, 84,86), ces couches étant déposées, dans leur orientation des fibres, symétriquement ou presque symétriquement par rapport au plan de symétrie médian de la préforme (78) de la préforme TFP.

49. Composant composite fibreux selon au moins l'une quelconque des revendications 29 à 48,
**caractérisé en ce que**
la préforme TFP (36, 48) est composée d'au moins deux couches ou strates (38, 40, 42, 44, 50, 52, 54, 56), une des couches ou strates (38,42) étant constituée de fibres de renforcement déposées radialement et la couche ou strate restante (40,44) étant constituée de fibres de renforcement déposées en forme d'anneau.

50. Composant composite fibreux selon au moins l'une quelconque des revendications 29 à 49,
**caractérisé en ce que**
les couches ou strates superposées (38, 40, 42, 44, 50, 52, 54, 56) de la préforme TFP sont à chaque fois fermées par couture avec la couche de base (46, 58).

51. Composant composite fibreux selon au moins l'une quelconque des revendications 29 à 50,
**caractérisé en ce que**
la préforme TFP (48, 76) présente, dans ses surfaces ou couches extérieures (50, 56, 84, 86), de fibres d'orientation identique ou presque identique.

52. Composant composite fibreux selon au moins l'une quelconque des revendications 29 à 51,
**caractérisé en ce que**
la structure d'un disque de frein est composée par au moins deux préformes TFP écartées (26, 28 60, 62) et reliées par des nervures constituées de fibres de renforcement (30, 32, 34, 44, 46).

53. Composant composite fibreux selon au moins l'une quelconque des revendications 20 à 52,
**caractérisé en ce que**
la préforme TFP (62) présente dans la région d'un point d'application de la force, une partie épaissie (68) formée par des fibres de renforcement.

54. Composant composite fibreux selon au moins la revendication 53
**caractérisé en ce que**
les fibres de renforcement dans la partie épaissie (68) sont déposées de manière à se croiser.

55. Composant composite fibreux selon au moins la revendication 52,
**caractérisé en ce que**
les fibres de renforcement dans les nervures (64, 66) sont déposées de manière à se croiser.

56. Composant composite fibreux selon au moins l'une quelconque des revendications 29 à 55,
**caractérisé en ce que**
la préforme TFP (60, 62) présente sur sa surface extérieure libre d'une couche de non-tissé (72,74).
